# EUROPÄISCHE PATENTSCHRIFT

(11) **EP 1 995 850 B1**
(45) Veröffentlichungstag und Bekanntmachung des Hinweises auf die Patenterteilung: **30.06.2010**
(21) Anmeldenummer: 07010514.3
(22) Anmeldetag: 25.05.2007
(51) Int. Cl.: H02K 3/40, H02K 15/10, H01B 7/00

(54) **Endenglimmschutzanordnung**
Glow protector
Dispositif anti-effluves

(43) Veröffentlichungstag der Anmeldung: 26.11.2008
(73) Patentinhaber: SIEMENS AKTIENGESELLSCHAFT, 80333 München (DE)
(72) Erfinder: Kempen, Stefan, 44263 Dortmund (DE); Kowalski, Waldemar, 45472 Mülheim an der Ruhr (DE); Nottelmann, Ralf, 45470 Mülheim an der Ruhr (DE); Pohlmann, Friedhelm, 45355 Essen (DE); Schattauer, Dora, 45473 Mülheim an der Ruhr (DE)

(56) Entgegenhaltungen:
- EP-A2- 0 644 556
- WO-A-03/107512
- JP-A- 58 159 643

## Beschreibung

Die vorliegende Erfindung betrifft eine Endenglimmschutzanordnung für eine Hochspannungskomponente.

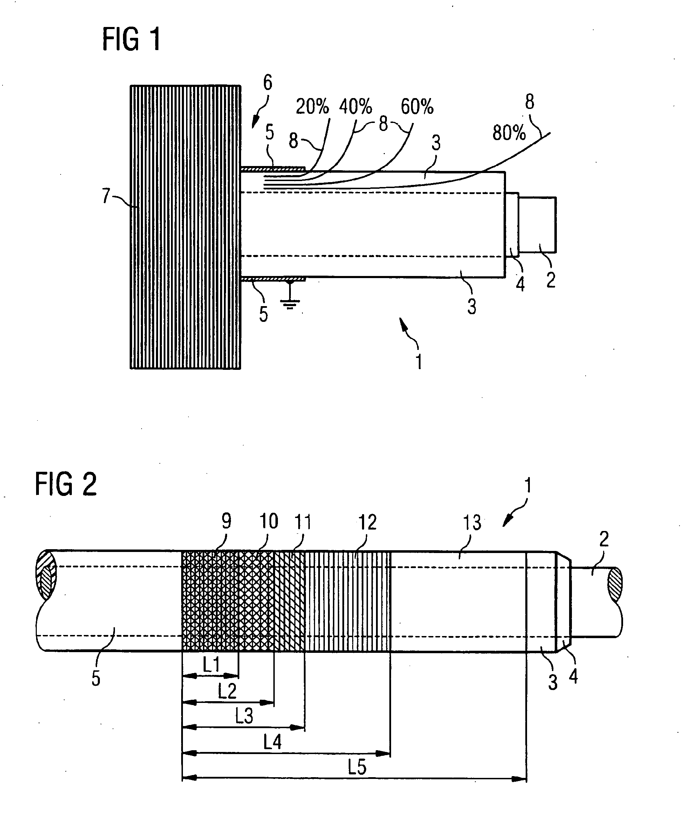

Eine solche Endenglimmschutzanordnung wird insbesondere bei einem Wicklungsstab eingesetzt, der vorzugsweise in einem Generator vorhanden ist. Der Wicklungsstab stellt in diesem Fall die Hochspannungskomponente dar. Fig. 1 zeigt beispielhaft eine schematische Darstellung eines Wicklungsstabs 1 im Schnitt, dessen Aufbau an sich bekannt ist. Der Wicklungsstab 1 weist einen länglichen elektrischen Leiter 2 auf, der eine Vielzahl von Einzelleitern enthalten kann. Der elektrische Leiter 2 ist von einer Isolierungsschicht 3 umgeben. Im normalen Betrieb des Wicklungsstabs 1 werden Betriebsspannungen von mehreren kV eingesetzt. Um bei diesen hohen Spannungen Teilentladungen zu vermeiden, ist die Isolierungsschicht 3 an ihrer, in radialer Richtung betrachtet, inneren Oberfläche mit einer inneren elektrisch leitfähigen Schicht 4 und an ihrer, in radialer Richtung betrachtet, äußeren Oberfläche mit einer äußeren elektrisch leitfähigen Schicht 5 gegen Hohlräume und Ablösungen abgeschirmt. Die innere Leitschicht 4 wird auch als innere Potentialsteuerung, IPS, und die äußere Leitschicht 5 als Außenglimmschutz, AGS, bezeichnet. Die innere Leitschicht 4 dient insbesondere auch zum Vergleichmäßigen der Oberfläche des Leiters 2, der üblicherweise produktionsbedingt Spitzen und Kanten aufweist, an denen hohe elektrische Feldstärken auftreten könnten. Im Bereich einer Austrittsstelle 6 des Wicklungsstabs 1 aus einem Ständerblechpaket 7 des Generators endet die äußere Schicht 5 nach einer kurzen Wegstrecke, während die Isolierungsschicht 3, die innere Schicht 4 und der Leiter 2 in Richtung des axialen Endes des Wicklungsstabs 1 weitergeführt sind.

Diese Anordnung des Wicklungsstabs 1 nach Fig. 1 stellt eine typische Gleitanordnung mit extrem niedriger Teilentladungseinsetzspannung dar. Ein elektrisches Feld hat in diesem Bereich des Wicklungsstabs 1, in dem dieser aus dem Ständerblechpaket 7 ausgetreten ist, neben einer radialen auch eine starke nichtlineare, tangentiale Komponente in axialer Richtung parallel zur äußeren Oberfläche der Isolierungsschicht 3. In der Fig. 1 sind beispielhaft und schematisch vier Potentiallinien 8 in der Isolierungsschicht 3 eingezeichnet, die einen Verlauf und einen Abbau des Potentials in axialer und radialer Richtung zeigen. Dargestellt sind, in axialer Richtung ausgehend von der Austrittsstelle 6 in Richtung des Endes des Wicklungsstabs 1 betrachtet, eine 20%, 40%, 60% und eine 80% Potentiallinie. Die Feldstärkelinien des elektrischen Feldes verlaufen senkrecht zu den Potentiallinien. Die Gefahr von Gleitentladungen ist dort am größten, wo der Abstand zwischen den Potentiallinien am geringsten ist. Die größte elektrische Feldstärke tritt am Ende, d. h. an der Kante, der äußeren Schicht 5 auf. Es ist daher erforderlich, an dieser Kante der äußeren Schicht 5 und in der Umgebung der freiliegenden Isolierungsschicht 3 für eine Feldsteuerung des elektrischen Feldes und für eine Erhöhung der Durchschlagsfestigkeit zu sorgen.

Dies wird üblicherweise mit einer resistiven Potentialsteuerung durch halbleitende Lacke oder Bänder erreicht, mit der Gleitentladungen unterdrückt werden können. Als halbleitendes Material wird dabei Siliziumkarbid, SiC, eingesetzt. Ziel dieser Potentialsteuerung ist ein Sicherstellen eines gleichmäßigen, tangentialen Potentialabbaus entlang der äußeren Oberfläche der Isolierungsschicht 3. Im Idealfall soll dieser Potentialabbau linearisiert werden. Dies kann dann erreicht werden, wenn pro Längeneinheit immer der gleiche Spannungsbetrag abfällt. Dafür wird ein in axialer Richtung ortsabhängiger und spannungsabhängiger Widerstandsbelag hergestellt. Die Ortsabhängigkeit wird durch das Aufbringen unterschiedlicher, sich teilweise überlappender Lagen der Lacke oder Bänder in axialer Richtung gewährleistet. Die Lacke oder Bänder können gleiche oder unterschiedliche Leitfähigkeiten haben. Die halbleitenden Bänder bestehen üblicherweise aus einem nichtleitenden Trägermaterial das mit dem halbleitenden Material, z. B. SiC, versehen ist. Gängig ist ein Polyestergewebe, das mit einem siliziumkarbidgefüllten Kunstharz imprägniert ist. Die Anwendung der Bänder ist aufgrund des Dickenauftrags und der im Wickelkopf einzuhaltenden Luftabstände zwischen benachbarten Drehstromwicklungen auf Spannungsebenen bis etwa 22kV begrenzt. Aufgrund der Trennung zwischen dem Trägermaterial und der Funktionsschicht können sich gegebenenfalls Probleme bei der Haftung der Funktionsschicht an dem Trägermaterial ergeben.

Fig. 2 zeigt ein Beispiel des Wicklungsstabs 1, in dem dieser mit mehreren Schichten 9, 10, 11, 12 und 13 von Lackanstrichen versehen ist, die sich in axialer Richtung teilweise überlappen. Die Lackanstriche sind mit einem Lack durchgeführt, der ein halbleitendes Material auf Siliziumkarbidbasis enthält. Die Schichten 9-13 beginnen in axialer Richtung an der gleichen Stelle und überlappen dabei teilweise die äußere Schicht 5. Die Schicht 9 realisiert mittels eines Übergangsanstrichs eine Verbindung zu der äußeren Schicht 5. Die Schicht 9 weist eine axiale Länge L1 auf. Die Schicht 10 weist eine Länge L2 auf und bildet einen ersten Anstrich. Die Schicht 11 weist eine Länge L3 auf und bildet einen zweiten Anstrich. Die Schicht 12 weist eine Länge L4 auf und bildet einen dritten Anstrich. Die Schicht 13 weist eine Länge L5 auf und bildet einen vierten Anstrich. Dabei gilt: L1<L2<L3<L4<L5.

Ein Wickelkopf mit Glimmdraht ist in der Wo 03/107512 A1 offenbart.
Die JP 581 586 43 offenbart einen aus Halbleitern bestehenden Glimmschutz einer elektrischen Maschine.

In der EP 0 644 556 A2 wird eine Hochspannungswicklung offenbart.

Der vorliegenden Erfindung liegt die Aufgabe zugrunde, einen zuverlässigen Endenglimmschutz für eine Hochspannungskomponente zu gewährleisten, um Gleitentladungen zu verhindern.

Diese Aufgabe wird durch die technische Lehre des Anspruchs 1 gelöst. Vorteilhafte Ausgestaltungen der Erfindung sind in den abhängigen Ansprüchen enthalten.

Die erfindungsgemäße Endenglimmschutzanordnung ist insbesondere für einen Wicklungsstab oder für eine Schaltleitung als Hochspannungskomponenten einsetzbar. Bei einem Einsatz der erfindungsgemäßen, sehr dünn ausgestalteten Endenglimmschutzanordnung in einem Wicklungsstab ermöglicht diese eine Verwendung des Wicklungsstabs auch bei sehr hohen Betriebsspannungsebenen, die insbesondere bis zu 27kV reichen können, da vorteilhafterweise ein vergrößerter Abstand zu benachbarten Wicklungen des Drehstromsystems möglich ist. Der größere Abstand ermöglicht, dass die vorgeschriebenen Spannungsabstände insbesondere im Bereich eines Phasensprunges eingehalten bzw. minimiert werden können.

Erfindungsgemäß weist die Endenglimmschutzanordnung einen gewickelten Widerstandsdraht auf, so dass mehrere Windungen des Widerstandsdrahts ausgebildet sind. Ein solcher Widerstandsdraht ist besonders kostengünstig und einfach herstellbar und auf die Hochspannungskomponente montierbar. Bei einer Hochspannungskomponente, die einen länglichen elektrischen Leiter aufweist, der mit einer Isolierungsschicht umgeben ist, dient der Widerstandsdraht insbesondere zum Umwickeln der Isolierungsschicht. Dadurch kann auf effiziente Weise ein Widerstandsbelag zum Herstellen des Endenglimmschutzes erreicht werden. Der Widerstandsbelag, der in Ohm/cm² angegeben werden kann, ergibt sich aus dem spezifischen Widerstand und dem Durchmesser des Widerstandsdrahts sowie aus dem Abstand zweier benachbarter Windungen des gewickelten Widerstandsdrahts. Damit eine Steuerung des elektrischen Feldes wirksam ist, wird der Gesamtwiderstand des Drahts vorteilhafterweise so bemessen, dass der Längsstrom, der längs durch den Widerstandsdraht fließt, größer oder gleich einem kapazitiven Querstrom ist, der durch die Isolierungsschicht im Bereich der Endenglimmschutzanordnung fließt. Die Endenglimmschutzanordnung mit dem Widerstandsdraht ist vorteilhafterweise besonders unempfindlich gegenüber hohen Temperaturen. Dadurch ist eine Anpassung der Endenglimmschutzanordnung an ein Isolierungssystem einer hohen Wärmeklasse möglich. Der Herstellungsprozess zum Aufbringen des Endenglimmschutzes auf die Hochspannungskomponente ist sehr einfach und schnell. Es sind keine Wartezeiten, wie z. B. bei einem Trocknungsvorgang bei einem Aufbringen von Lackschichten als Endenglimmschutz, erforderlich. Der Widerstandsdraht kann auf einfache Weise maschinell auf die Hochspannungskomponente aufgebracht werden. Die erfindungsgemäße Endenglimmschutzanordnung ist sowohl für eine Einzelabtränkung als auch für eine Ganztränkung geeignet. Des Weiteren ist die erfindungsgemäße Endenglimmschutzanordnung besonders gegenüber mechanischen Beanspruchungen unempfindlich. Ferner ist ein Dickenauftrag zum Bewickeln besonders gering.

In einer vorteilhaften Ausgestaltung der Erfindung sind Abstände zwischen jeweils zwei benachbarten der mehreren Windungen des Widerstandsdrahts unterschiedlich. Dadurch ist auf einfache Weise eine Steuerung des elektrischen Feldes und eine geeignete Potentialaufteilung möglich. Ein Einstellen des unterschiedlichen und variablen ortsabhängigen Abstands zweier benachbarter Windungen gewährleistet eine gewünschte Ortsabhängigkeit des Widerstandsbelags. Für einen kleinen Wicklungsabstand ergibt sich ein kleiner spezifischer Oberflächenwiderstand und für einen großen Wicklungsabstand ein großer spezifischer Oberflächenwiderstand. Eine Ortsfunktion für den Oberflächenwiderstand kann für eine einfache Geometrie analytisch und für eine aufwendige, komplizierte Geometrie durch eine numerische Feldberechnung berechnet werden.

In einer weiteren, besonders vorteilhaften Ausgestaltung werden die Abstände zwischen jeweils zwei benachbarten der mehreren Windungen des Widerstandsdrahts in axialer Richtung, insbesondere kontinuierlich, größer. Dadurch kann eine besonders geeignete Steuerung des elektrischen Feldes und ein besonders effizienter Potentialabbau realisiert werden. Das gegenüber einem stufenförmigen Vergrößern vorteilhafte kontinuierliche Vergrößern der Abstände zwischen jeweils zwei benachbarten Windungen ist durch das Wickeln des Widerstandsdrahts auf besonders einfache Weise erreichbar.

Bevorzugt weist der Widerstandsdraht einen nichtlinearen Werkstoff auf, dessen Leitfähigkeit sich nichtlinear in Abhängigkeit von einer elektrischen Feldstärke verändert. Dies gewährleistet eine besonders sichere und genaue Steuerung des elektrischen Feldes und einen entsprechend geeigneten Potentialabbau.

Besonders bevorzugt weist der Widerstandsdraht Konstantan, Manganin und/oder eine Kohlefaser als Werkstoff auf. Diese Materialien gewährleisten eine gute Leitfähigkeit und einen zuverlässigen Potentialabbau.

Nachfolgend werden die Erfindung und ihre Vorteile anhand von Beispielen und Ausführungsbeispielen und der beigefügten Zeichnung näher erläutert. Es zeigen:
- Fig. 1: eine geschnittene, schematische Darstellung eines herkömmlichen Wicklungsstabs als Hochspannungs- komponente ohne Endenglimmschutz,
- Fig. 2: eine schematische Darstellung des herkömmlichen Wicklungsstabs mit mehreren Schichten eines Lacks als Endenglimmschutzanordnung, der ein halblei- tendes Material auf Basis von Siliziumkarbid ent- hält,
- Fig. 3: eine schematische Darstellung eines nicht zur Erfindung gehörenden ersten Ausführungsbeispiels eines Wicklungsstabs mit einer bandförmigen
- Fig. 4: Endenglimmschutzanordnung, die resistiv- leitfähige Fäden aufweist, eine schematische Darstellung eines nicht zur Erfindung gehörenden zweiten Ausführungsbeispiels eines Wicklungsstabs mit einer Enden- glimmschutzanordnung, die mehrere zylindrische, elektrisch leitfähige Steuerbeläge aufweist, die radial parallel zueinander, um eine gemeinsame Achse angeordnet und in ihren axialen Längen ab- gestuft sind,
- Fig. 5: eine schematische Darstellung eines dritten Ausführungsbeispiels eines erfindungsgemäßen Wicklungsstabs mit einer erfindungsgemäßen Enden- glimmschutzanordnung, die einen gewickelten Widerstandsdraht aufweist, und
- Fig. 6A-6C: schematische Darstellungen von verschiedenen Wicklungsstäben gemäß einem vierten Ausführungsbeispiel mit Endenglimmschutzanordnungen, die mehrere Schich- ten eines Lacks auf Basis eines Metalloxids auf- weisen.

In den Figuren sind nachfolgend gleiche oder funktionsgleiche Elemente - sofern nichts anderes angegeben ist - mit denselben Bezugszeichen versehen.

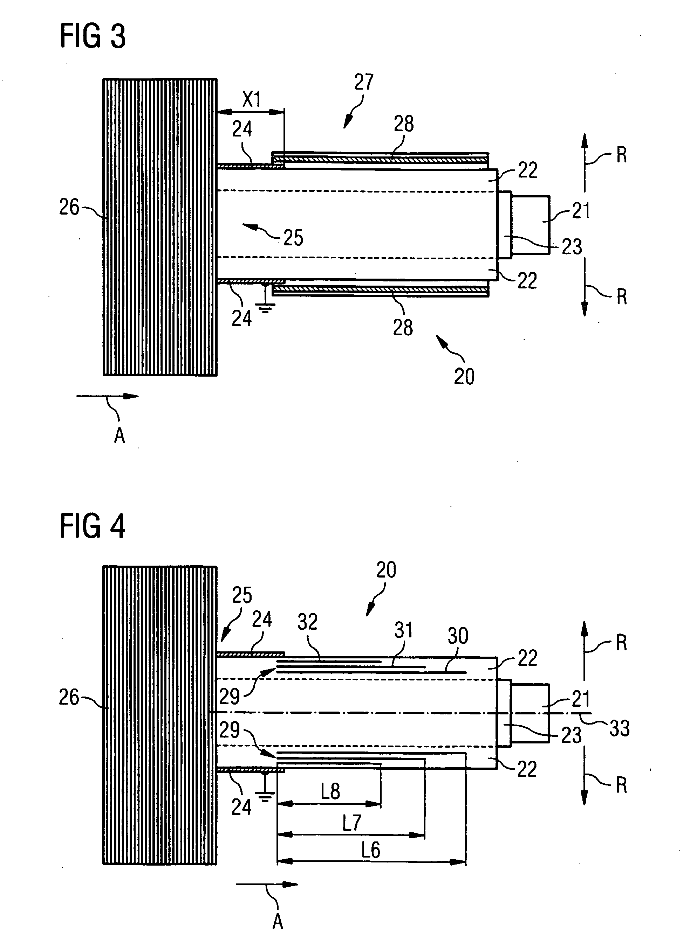

Fig. 3 zeigt eine schematische Darstellung eines ersten Ausführungsbeispiels eines Wicklungsstabs 20, der in einem Generator als elektrischer Arbeitsmaschine eingesetzt ist. Der Wicklungsstab 20 enthält einen länglichen elektrischen Leiter 21, der aus einer Vielzahl von nicht näher dargestellten Einzelleitern zusammengesetzt ist. Der elektrische Leiter 21 ist von einer Isolierungsschicht 22 umgeben. Die Isolierungsschicht 22 enthält vorzugsweise ein Glasfasermaterial, in das Glimmer eingefügt ist. Die Isolierungsschicht 22 ist an ihrer, in einer radialen Richtung R betrachtet, inneren Oberfläche mit einer inneren elektrisch leitfähigen Schicht 23, der inneren Potentialsteuerung, IPS, und an ihrer, in radialer Richtung R betrachtet, äußeren Oberfläche mit einer äußeren elektrisch leitfähigen Schicht 24, dem Außenglimmschutz, AGS, abgeschirmt. Im Bereich einer Austrittsstelle 25 des Wicklungsstabs 20 aus einem Ständerblechpaket 26 des Generators endet die äußere Schicht 24 in einer axialen Richtung A nach einer kurzen Wegstrecke X1. Die Isolierungsschicht 22, die innere Schicht 23 und der Leiter 21 erstrecken sich dagegen in axialer Richtung A in Richtung des Endes des Wicklungsstabs 20 weiter.

Der Wicklungsstab 20 enthält eine Endenglimmschutzanordnung 27 zum Schutz vor Gleitentladungen. Die Endenglimmschutzanordnung 27 ist als dünnes Band ausgestaltet, das um die, in radialer Richtung R betrachtet, äußere Oberfläche der Isolierungsschicht 22 gewickelt ist. Die bandförmige Endenglimmschutzanordnung 27 kann die Isolierungsschicht 22 insbesondere wendelförmig umwickeln, so dass jede Wendel die vorhergehende teilweise überlappt. Es ist möglich, mehrere solcher Wicklungsschichten aufzubringen. Bei diesem Umwickeln ist ein Teil der äußeren Schicht 24 mit umwickelt. Die Endenglimmschutzanordnung 27 weist resistiv-leitfähige Fäden 28 auf, die hier in das dünne Band eingewebt sind. Diese leitfähigen Fäden 28 enthalten Carbonfasern, Konstantanfasern und/oder weitere Widerstandslegierungen. Die leitfähigen Fäden 28 sind in der Querschnittsfläche der bandförmigen Endenglimmschutzanordnung 27 so angeordnet, dass sie in dem gewickelten Zustand nahezu in axialer Richtung A verlaufen. Die leitfähigen Fäden 28 erstrecken sich in diesem Fall nahezu parallel zur äußeren Oberfläche der Isolierungsschicht 22. Über die Erstreckung der Endenglimmschutzanordnung 27 in axiale Richtung A verändert sich vorzugsweise ihre Leitfähigkeit. Durch diese Ortsabhängigkeit der Leitfähigkeit lässt sich ein Abbau des Potentials gleichmäßig gestalten. Diese Ortsabhängigkeit der Leitfähigkeit lässt sich vorteilhafterweise dadurch besonders einfach erreichen, dass die Anzahl der Fäden 28 und/oder deren radiale Dicke über die axiale Erstreckung unterschiedlich ist. Dies ist in der Fig. 3 angedeutet, indem die radiale Dicke der Fäden 28 ausgehend von der Umwicklung an der äußeren Schicht 24 in axialer Richtung A insbesondere linear abnimmt. Anstelle des Umwickelns der radial äußeren Oberfläche der Isolierungsschicht 22 mit der bandförmigen Endenglimmschutzanordnung 27 können die Fäden 28 als Endenglimmschutzanordnung 27 in den äußeren Randbereich der Isolierungsschicht 22 parallel zu ihrer radial äußeren Oberfläche eingebracht sein.

Fig. 4 zeigt eine schematische Darstellung eines zweiten Ausführungsbeispiels des Wicklungsstabs 20. Der Wicklungsstab 20 gemäß dem zweiten Ausführungsbeispiel entspricht weitgehend dem Wicklungsstab 20 gemäß dem ersten Ausführungsbeispiel nach Fig. 3. Allerdings unterscheidet sich eine Endenglimmschutzanordnung 29 des Wicklungsstabs 20 gemäß dem zweiten Ausführungsbeispiel von der Endenglimmschutzanordnung 27 des Wicklungsstabs 20 gemäß dem ersten Ausführungsbeispiel. Die Endenglimmschutzanordnung 29 weist mehrere zylindrische, elektrisch leitfähige Steuerbeläge 30, 31 und 32 auf. Die Steuerbeläge 30-32 sind in radialer Richtung R voneinander beabstandet und parallel zueinander, um eine gemeinsame Achse 33 angeordnet. Die gemeinsame Achse 33 ist gleichzeitig die Achse des Wicklungsstabs 20. Die Steuerbeläge 30-32 weisen in radialer Richtung R gleiche Abstände zu ihren benachbarten Steuerbelägen 30-32 auf. An ihren dem Ständerblechpaket 26 zugewandten Stirnseiten sind die Steuerbeläge 30-32 bündig angeordnet. Die axialen Längen der Steuerbeläge 30-32 sind in radialer Richtung R abgestuft. Der in radialer Richtung R innenliegende Steuerbelag 30 weist eine axiale Länge L6 auf, die die größte der axialen Längen der Steuerbeläge 30-32 darstellt. Der in radialer Richtung R mittlere Steuerbelag 31 weist eine axiale Länge L7 und der in radialer Richtung R äußere Steuerbelag 32 eine axiale Länge L8 auf, die die kleinste der axialen Längen der Steuerbeläge 30-32 ist. Es gilt: L6<L7<L8. Durch die Steuerbeläge 30-32 und ihre Anordnung wird auf einfache Weise ein Kapazitätsnetzwerk geschaffen, das sehr effizient zum Potentialabbau und zum Steuern des elektrischen Felds eingesetzt werden kann.

Zur Herstellung der Steuerbeläge 30-32 wird ein Band eingesetzt, das auf einer Seite elektrisch leitfähig und auf der anderen, gegenüberliegenden Seite nicht elektrisch leitfähig ist. Die nicht leitfähige Seite des Bands weist vorteilhafterweise eine hohe Dielektrizitätskonstante auf, um eine große Kapazität zwischen zwei benachbarten Steuerbelägen 30-32 zu erhalten. Die Dielektrizitätskonstante ist hier vorteilhafterweise größer als 100 und kann insbesondere größer als 1000 sein. Das für die Steuerbeläge 30-32 eingesetzte Band ist vorteilhafterweise eine gängige Kondensatorfolie, die auch zur Herstellung von Folienkondensatoren eingesetzt wird. Dies ist besonders kostengünstig.

Im Ausführungsbeispiel nach Fig. 4 sind die Steuerbeläge 30-32 der Endenglimmschutzanordnung 29 in die Isolierungsschicht 22 des Wicklungsstabs 20 integriert. Es ist allerdings ebenso möglich, ein gesondertes Band vorzusehen, das die Steuerbeläge 30-32 enthält und das um die radial äußere Oberfläche der Isolierungsschicht 22 beispielsweise nach Art der Endenglimmschutzanordnung 27 gewickelt ist.

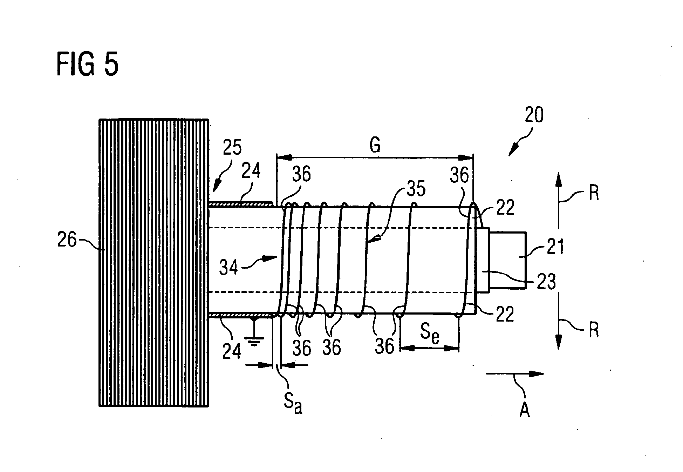

Fig. 5 zeigt eine schematische Darstellung eines dritten Ausführungsbeispiels des erfindungsgemäßen Wicklungsstabs 20. Der Wicklungsstab 20 gemäß dem dritten Ausführungsbeispiel entspricht weitgehend den Wicklungsstäben 20 gemäß dem ersten und dem zweiten Ausführungsbeispiel nach Fig. 3 bzw. 4. Allerdings unterscheidet sich eine Endenglimmschutzanordnung 34 des Wicklungsstabs 20 gemäß dem dritten Ausführungsbeispiel von der Endenglimmschutzanordnung 27 des Wicklungsstabs 20 gemäß dem ersten Ausführungsbeispiel und der Endenglimmschutzanordnung 29 des Wicklungsstabs 20 gemäß dem zweiten Ausführungsbeispiel. Die erfindungsgemäße Endenglimmschutzanordnung 34 weist einen gewickelten Widerstandsdraht 35 auf, der um die radial äußere Oberfläche der Isolierungsschicht 22 gewickelt ist. Das Wickeln des Widerstandsdrahts 35 beginnt hier mit dem Ende der äußeren Schicht 24 und erstreckt sich in axialer Richtung A über eine axiale Länge G in Richtung des Endes des Wicklungsstabs 20. Dadurch entstehen mehrere Windungen 36 des Widerstandsdrahts 35. Die Abstände zwischen jeweils zwei benachbarten Windungen 36 vergrößern sich vorteilhafterweise kontinuierlich ausgehend vom Beginn des gewickelten Widerstandsdrahts 35 an der äußeren Schicht 24 bis zu seinem Ende. Zwischen der ersten und der zweiten Windung des Widerstandsdrahts 35 besteht ein kürzester Abstand sₐ und zwischen der vorletzten und der letzten Windung des Widerstandsdrahts 35 ein längster Abstand sₑ. Durch die unterschiedlichen Abstände zwischen den Wicklungen 36 lässt sich eine Ortsabhängigkeit des Widerstandsbelags, und damit des Oberflächenwiderstands an der äußeren Oberfläche der Isolierungsschicht 22, erreichen. Dies gewährleistet einen gleichmäßigen Potentialabbau. Der Widerstandsdraht 35 enthält Konstantan, Manganin und/oder Kohlefasern als Werkstoff. Diese Materialien sind vorteilhafterweise besonders unempfindlich gegenüber hohen Temperaturen. Insbesondere kann der Widerstandsdraht 35 einen nichtlinearen Werkstoff enthalten, dessen Leitfähigkeit abhängig von einer vorhandenen elektrischen Feldstärke ist. Dies ermöglicht eine besonders einfache Steuerung des elektrischen Felds.

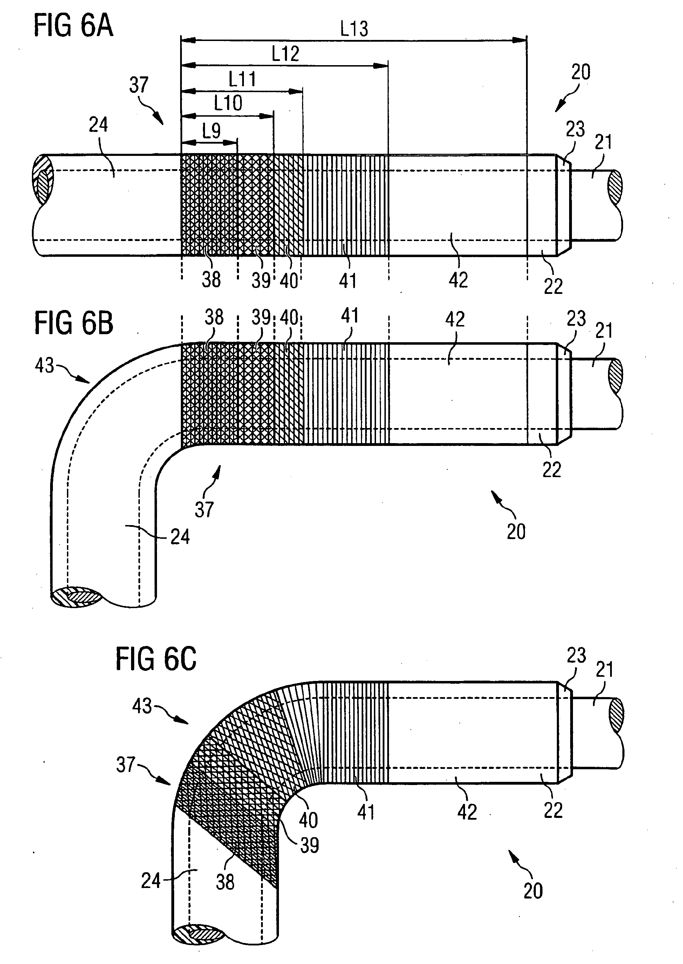

Fig. 6A-6C zeigen schematische Darstellungen von drei verschiedenen Wicklungsstäben 20 gemäß einem vierten Ausführungsbeispiel. Die Wicklungsstäbe 20 gemäß dem vierten Ausführungsbeispiel entsprechen weitgehend den Wicklungsstäben 20 gemäß der vorhergehenden Ausführungsbeispiele nach den Fig. 3-5. Allerdings unterscheidet sich eine Endenglimmschutzanordnung 37 der Wicklungsstäbe 20 gemäß dem vierten Ausführungsbeispiel von den Endenglimmschutzanordnungen 27, 29 und 34 der vorhergehenden Ausführungsbeispiele. Die erfindungsgemäße Endenglimmschutzanordnung 37 weist mehrere Schichten 38, 39, 40, 41 und 42 eines Lacks auf, die sich teilweise überlappen. Insofern stimmt die Endenglimmschutzanordnung 37 mit derjenigen des bekannten Wicklungsstabs 1 nach Fig. 2 überein, die die Schichten 9-13 aufweist. Die Schichten 38-42 beginnen hier vorteilhafterweise in axialer Richtung an der gleichen Stelle und überlappen teilweise die äußere Schicht 24. Die Schicht 38 realisiert mittels eines Übergangsanstrichs eine Verbindung zu der äußeren Schicht 24. Die Schicht 38 weist eine axiale Länge L9 auf. Die Schicht 39 weist eine Länge L10 auf und bildet einen ersten Anstrich. Die Schicht 40 weist eine Länge L11 auf und bildet einen zweiten Anstrich. Die Schicht 41 weist eine Länge L12 auf und bildet einen dritten Anstrich. Die Schicht 42 weist eine Länge L13 auf und bildet einen vierten Anstrich. Dabei gilt: L9<L10<L11<L12<L13.

Im Gegensatz zu der Schicht 9-13 gemäß Fig. 2 weist der hier verwendete Lack allerdings eine andere Zusammensetzung auf. Der im vierten Ausführungsbeispiel nach den Fig. 6A-6C verwendete Lack enthält ein Metalloxid als leitfähiges Material. Das hier eingesetzte Metalloxid ist Zinkoxid, ZnO, das einen hohen Nichtlinearitätskoeffizienten zwischen 30 und 40 hat. Dadurch ist die Leitfähigkeit des Lacks stark von den vorhandenen elektrischen Feldstärken abhängig. Insbesondere gilt, je höher die vorhandene elektrische Feldstärke, desto höher ist die Leitfähigkeit des Lacks auf Basis des Metalloxids. Dadurch kann ein Potentialabbau und ein gleichmäßiger Potentialverlauf innerhalb einer kurzen Strecke gewährleistet werden. Die Lacke für die Schichten 38-42 haben im vorliegenden Ausführungsbeispiel jeweils die gleiche Zusammensetzung. Es ist aber ebenso möglich, die Zusammensetzungen der Lacke unterschiedlich auszugestalten. Insbesondere ist es auch möglich, eine oder mehrere, allerdings nicht alle, der Schichten 38-42 auf Basis von Siliziumkarbid, SiC, zu realisieren.

Die Wicklungsstäbe 20 nach den Fig. 6A-6C unterscheiden sich in ihren Formen. Die Wicklungsstäbe 20 nach den Fig. 6B und 6C sind in ihrer axialen Erstreckung gebogen und weisen somit eine Biegung 43 auf. Der Wicklungsstab 20 nach Fig. 6A ist dagegen axial linear ausgestaltet. Beim Wicklungsstab 20 gemäß Fig. 6B beginnen die Lackanstriche der Schichten 38-42 kurz vor dem Auslauf, d. h. dem Ende, der Biegung 43. Beim Wicklungsstab 20 gemäß Fig. 6C beginnen die Lackanstriche der Schichten 38-42 kurz vor dem Beginn der Biegung 43.

In den beschriebenen Ausführungsbeispielen werden Wicklungsstäbe als Hochspannungskomponenten beschrieben, die mit einer der erfindungsgemäßen Endenglimmschutzanordnungen versehen sind. Prinzipiell ist es ebenso möglich, eine der erfindungsgemäßen Endenglimmschutzanordnungen für eine andere Hochspannungskomponente einzusetzen. Dies gilt insbesondere für eine Schaltleitung als Hochspannungskomponente.

## Patentansprüche

1. Endenglimmschutzanordnung (34) für eine Hochspannungskomponente (20), deren elektrischer Leiter (21) von einer Isolierungsschicht (22) umgeben ist,
**dadurch gekennzeichnet, dass**
die Endenglimmschutzanordnung (34) einen gewickelten Widerstandsdraht (35) aufweist, der um die radial außere Oberfläche der Isolierungsschicht (22) gewickelt ist, wobei mehrere Windungen (36) des Widerstandsdrahts (35) ausgebildet sind.

2. Endenglimmschutzanordnung nach Anspruch 1,
**dadurch gekennzeichnet, dass**
Abstände (sₐ, sₑ) zwischen jeweils zwei benachbarten der mehreren Windungen (36) des Widerstandsdrahts (35) unterschiedlich sind.

3. Endenglimmschutzanordnung nach Anspruch 2,
**dadurch gekennzeichnet, dass**
die Abstände (sₐ, sₑ) zwischen jeweils zwei benachbarten der mehreren Windungen (36) des Widerstandsdrahts (35) in axialer Richtung (A), insbesondere kontinuierlich, größer werden.

4. Endenglimmschutzanordnung nach einem der Ansprüche 1 - 3,
**dadurch gekennzeichnet, dass**
der Widerstandsdraht (35) einen nichtlinearen Werkstoff aufweist, dessen Leitfähigkeit sich nichtlinear in Abhängigkeit von einer elektrischen Feldstärke verändert.

5. Endenglimmschutzanordnung nach einem der Ansprüche 1 - 4,
**dadurch gekennzeichnet, dass**
der Widerstandsdraht (35) Konstantan, Manganin und/oder eine Kohlefaser als Werkstoff aufweist.

## Claims

1. Overhang corona shielding arrangement (34) for a high-voltage component (20) whose electrical conductor (21) is surrounded by an insulating layer (22),
**characterized in that**
the overhang corona shielding arrangement (34) has wound resistance wire (35), which is wound around the radially outer surface of the insulating layer (22), with a plurality of turns (36) of the resistance wire (35) being formed.

2. Overhang corona shielding arrangement according to Claim 1,
**characterized in that**
distances (sₐ, sₑ) between in each case two adjacent rungs of the plurality of turns (36) of the resistance wire (35) are different.

3. Overhang corona shielding arrangement according to Claim 2,
**characterized in that**
the distances (sₐ, sₑ) between in each case two adjacent rungs of the plurality of turns (36) of the resistance wire (35) become greater in the axial direction (A), in particular continuously.

4. Overhang corona shielding arrangement according to one of Claims 1-3,
**characterized in that** the resistance wire (35) has a non-linear material whose conductivity varies non-linearly as a function of an electrical field strength.

5. Overhang corona shielding arrangement according to one of Claims 1-4,
**characterized in that**
the resistance wire (35) has constantan, manganin and/or a carbon fibre as the material.

## Revendications

1. Dispositif ( 34 ) anti-effluves pour un composant ( 20
) de haute tension, dont le conducteur ( 21 ) électrique est entouré d'une couche ( 22 ) isolante,
**caractérisé en ce que**
le dispositif ( 34 ) anti-effluves a un fil ( 35 ) de résistance bobiné, qui est bobiné autour de la surface extérieure radialement de la couche ( 22 ) isolante, plusieurs spires ( 36 ) du fil ( 35 ) de résistance étant formées.

2. Dispositif anti-effluves suivant la revendication 1,
**caractérisé en ce que**
des intervalles ( sa, Se ) entre respectivement deux spires ( 36 ) voisines parmi les plusieurs spires des fils ( 35 ) de résistance sont différents.

3. Dispositif anti-effluves suivant la revendication 2,
**caractérisé en ce que**
des intervalles ( sa, Se ) entre respectivement deux spires ( 36 ) voisines parmi les plusieurs spires du fil ( 35 ) de résistance deviennent de plus en plus grands, notamment d'une manière continue dans la direction ( A ) axiale.

4. Dispositif anti-effluves suivant l'une des revendications 1 à 3,
**caractérisé en ce que**
le fil ( 35 ) de résistance comporte un matériau non-linéaire dont la conductivité se modifie d'une manière non-linéaire en fonction d'une intensité de champ électrique.

5. Dispositif anti-effluves suivant l'une des revendications 1 à 4,
**caractérisé en ce que** le fil ( 35 ) de résistance comprend du constantan, de la manganine et/ou une fibre de carbone comme matériau.
